# FASCICULE DE BREVET EUROPEEN

(11) **EP 1 450 986 B1**
(45) Date de publication et mention de la délivrance du brevet: **31.08.2005**
(21) Numéro de dépôt: 02799794.9
(22) Date de dépôt: 06.12.2002
(51) Int. Cl.: B23Q 7/04, B23C 3/00, B23Q 1/76, B23Q 1/48

(54) **MACHINE D'USINAGE POUR ELEMENTS PROFILES LONGITUDINAUX**
BEARBEITUNGSMASCHINE FÜR LANGGESTRECKTE PROFILE
MILLING MACHINE FOR LONGITUDINAL PROFILED ELEMENTS

(30) Priorité: 06.12.2001 FR 0115797
(43) Date de publication de la demande: 01.09.2004
(73) Titulaire: Cinetic Machining, 46400 Saint Laurent les Tours (FR)
(72) Inventeur: NICAISE, Jean-Pierre, F-46400 Saint Jean Lagineste (FR)
(74) Mandataire: Peaucelle, Chantal
(86) Numéro de dépôt international: PCT/FR2002/004224
(87) Numéro de publication internationale: WO 2003/047813

(56) Documents cités:
- EP-A- 0 705 655
- EP-A- 1 068 925
- AT-B- 385 226
- FR-A- 2 685 239
- FR-A- 2 770 161
- FR-A- 2 770 433
- FR-A- 2 792 864
- PATENT ABSTRACTS OF JAPAN vol. 017, no. 312 (M-1429), 15 juin 1993 (1993-06-15) & JP 05 031639 A (NIPPEI TOYAMA CORP), 9 février 1993 (1993-02-09)

## Description

La présente invention concerne une machine destinée à l'usinage d'éléments profilés longitudinaux, notamment par enlèvement de copeaux (voir, par exemple, EP-1 068 925-A).

On connaît des machines destinées à l'usinage de tels éléments profilés qui sont constituées de deux ensembles, à savoir un ensemble de fraisage comportant une tête d'usinage mobile suivant trois axes, vertical, longitudinal et transversal et un ensemble de deux chariots porte poupées qui sont aptes, chacun, à admettre à glissement et à serrage les éléments profilés et à les positionner angulairement par rapport à la tête d'usinage. Pendant l'opération d'usinage les poupées assurent le maintien de l'élément profilé et sont, pour ce faire, solidarisées de celui-ci. Ces poupées sont disposées à une certaine distance l'une de l'autre qui est fonction de la rigidité nécessitée par le type d'usinage à effectuer. Cet écartement définit ainsi une fenêtre de travail qui représente la longueur d'usinage maximal que la machine pourra effectuer en un pas, si bien que pour usiner la totalité de la barre on procède par pas successifs.

Afin de simplifier les opérations de reprises nécessaires entre chaque pas, on a proposé d'associer à ces poupées une ou plusieurs poupées additionnelles. Ces poupées, tout en réalisant un maintien en référence de l'élément profilé, assurent le déplacement de celui-ci entre les différentes phases d'usinage correspondant aux différents pas successifs.

De tels dispositifs ne permettent de réaliser qu'un usinage pas par pas de l'élément profilé, la longueur d'un pas ne pouvant dépasser la largeur de la fenêtre définie par l'écartement des deux poupées, cet écartement étant lui-même fonction de la précision de l'usinage souhaité.

La présente invention a pour but de remédier à ces inconvénients en proposant une machine d'usinage permettant de réaliser un usinage totalement en continu de tels éléments profilés.

La présente invention a ainsi pour objet une machine destinée à l'usinage d'éléments profilés longitudinaux, du type comportant un bâti longitudinal pourvu de poupées de maintien de l'élément profilé à usiner, et d'au moins une tête d'usinage mobile par rapport à l'élément profilé suivant des composantes de déplacement préférentiellement perpendiculaires entre elles et perpendiculaires à l'axe longitudinal de celui-ci, laquelle machine comporte :
- au moins deux poupées de maintien disposées à proximité et de part et d'autre de la tête d'usinage, qui sont aptes, lors de l'usinage, à assurer le maintien à coulissement de l'élément profilé ,
- au moins deux poupées d'entraînement aptes à se déplacer longitudinalement par rapport au bâti, disposées de part et d'autre des poupées de maintien et aptes à se déplacer longitudinalement par rapport au bâti, chaque poupée d'entraînement étant pourvue d'un mandrin de serrage permettant d'assurer, à la demande, un serrage glissant de l'élément profilé ou un blocage de cet élément profilé de façon que le déplacement relatif de ce dernier par rapport à la tête d'usinage, dans la direction longitudinale soit assuré au moins en partie par le déplacement d'une poupée d'entraînement,
- des moyens de commande des déplacements des poupées d'entraînement, et des mandrins de serrage, ces moyens de commande étant aptes, en fonction des diverses phases d'usinage à réaliser, à assurer l'entraînement de l'élément profilé à l'aide d'une ou de plusieurs poupées d'entraînement, et à synchroniser les mouvements des poupées d'entraînement,
caractérisée en ce que les moyens de commande sont prévus pour commander, lors d'une opération d'usinage, une fixation à solidarisation sur l'élément profilé d'une poupée en position extrême et une fixation à glissement de l'autre poupée d'entraînement, et pour assurer le déplacement longitudinal relatif de l'élément profilé en commandant son déplacement par celui de la poupée dont il est solidaire et qui forme alors une poupée « menante », et lorsque la poupée « menante » arrive à proximité de la poupée de maintien, les moyens de commande, d'une part commandent la désolidarisation de la poupée d'avec l'élément profilé et d'autre part la solidarisation de l'autre poupée d'entraînement, qui devient alors la poupée « menante », avec l'élément profilé et qui assure le déplacement longitudinal relatif de l'élément profilé alors que la première poupée d'entraînement est ramenée en position prête à redevenir « menante ».

Préférentiellement au moins les poupées de maintien seront pourvues d'un mandrin rotatif comportant un dispositif de serrage de l'élément profilé apte à assurer son positionnement autour de son axe longitudinal.

Enfin il s'est avéré intéressant, pour réaliser certains types d'usinage, que la tête d'usinage comporte des moyens de déplacement dans le sens longitudinal de l'élément profilé.

On décrira ci-après, à titre d'exemple non limitatif, une forme d'exécution de la présente invention, en référence au dessin annexé sur lequel :
- La figure 1 est une vue schématique en perspective d'un mode de mise en oeuvre d'une machine d'usinage suivant l'invention.
- Les figures 2 à 4 sont des vues schématiques de la machine suivant l'invention représentée sur la figure 1 sur lesquelles on a positionné les poupées d'entraînement sur le banc dans certaines des positions caractéristiques qu'elles sont susceptibles d'occuper au cours d'une étape d'usinage.

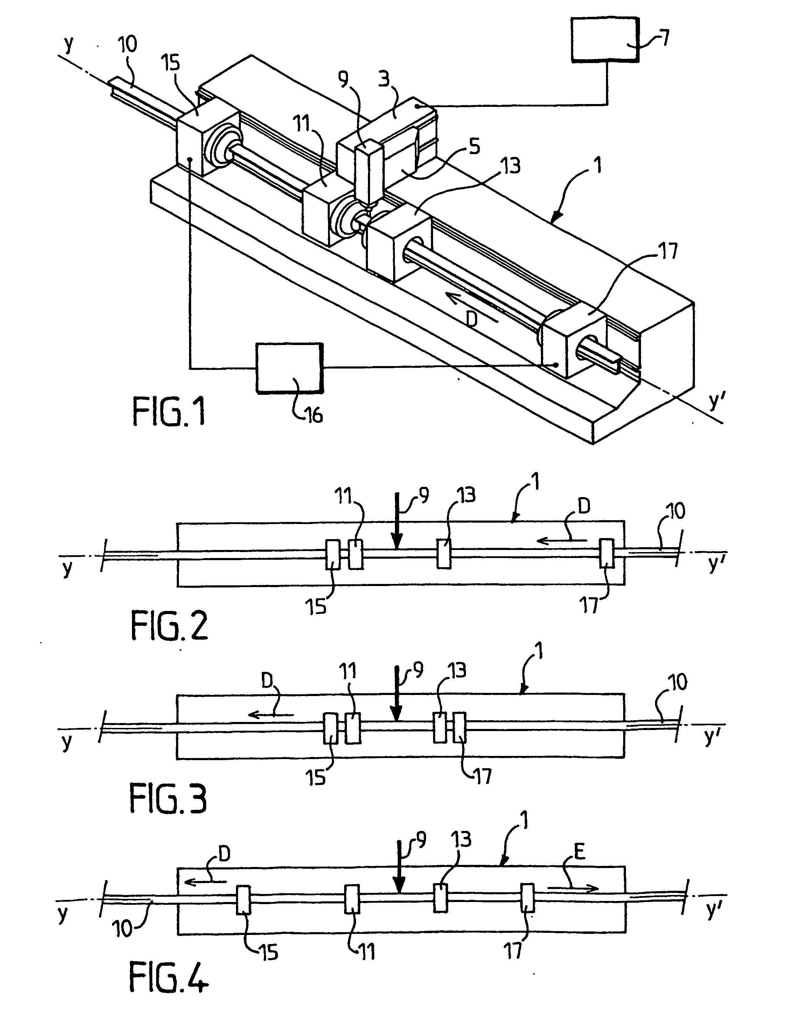

La machine d'usinage suivant l'invention, qui est représentée sur la figure 1, comprend un banc longitudinal 1 qui supporte une traverse 3 qui est fixée sensiblement au centre du banc 1. Cette traverse 3 supporte un traînard 5 qui est pourvu de moyens d'entraînement transversal contrôlés par des moyens de commande numérique 7. Le traînard 5 supporte lui-même une tête d'usinage 9 qui est montée mobile verticalement sous le contrôle des moyens de commande numérique 7. La tête d'usinage 9 est ainsi apte à se déplacer transversalement, verticalement et éventuellement longitudinalement.

Le banc 1 est également pourvu de quatre poupées, à savoir deux poupées de maintien 11 et 13 qui sont disposées de part et d'autre de la tête d'usinage 9 et deux poupées d'entraînement 15 et 17 qui sont disposées de part et d'autre des poupées de maintien. Les poupées d'entraînement 15, 17 ainsi que les poupées de maintien 11, 13 sont mobiles longitudinalement sur le banc 1 sous le contrôle de moyens de commande numérique 16. Leur mouvement peut se faire d'une façon totalement indépendante l'une de l'autre ou au contraire de façon parfaitement synchronisée et ceci suivant leur programme de commande.

De façon connue, les poupées de maintien 11, 13 et les poupées d'entraînement 15, 17 sont équipées de mandrins de serrage à pression variable permettant d'assurer, à la demande, un blocage et un serrage d'un élément profilé 10, ou au contraire un serrage glissant de celui-ci, et ceci en fonction des instructions fournies par les moyens de commande numérique 16. Les mandrins sont équipés de moyens permettant de faire tourner l'élément profilé 10 autour de son axe longitudinal yy' et de moyens référentiels permettant de positionner l'élément profilé 10 par rapport à celui-ci.

Le fonctionnement de la machine suivant l'invention s'établit ainsi que décrit dans l'exemple ci-après.

On introduit tout d'abord l'élément profilé 10 dans les quatre poupées de façon qu'il vienne en contact avec le référentiel prévu, ce qui assure son positionnement angulaire par rapport à l'axe longitudinal yy', puis l'on positionne les poupées de maintien 11 et 13 avec un faible écartement de façon à favoriser une meilleure qualité d'usinage. Les mandrins de ces poupées sont serrés sur l'élément profilé 10 de façon à ne pas bloquer celui-ci mais à lui permettre un déplacement à coulissement.

Dans le cas où, par exemple, le défilement de l'élément profilé 10 s'effectue de droite à gauche sur la figure, suivant la flèche D, on positionne au départ la poupée d'entraînement 17 (poupée droite) en position extrême droite du banc 1, ainsi que représenté schématiquement sur la figure 2, et la poupée d'entraînement 15 (poupée gauche) contre la poupée de maintien qui lui est adjacente, à savoir la poupée 11.

Suivant l'invention les moyens de commande numérique 16 commandent alors une fixation à solidarisation de la poupée 17 sur l'élément profilé 10 et une fixation à glissement de la poupée d'entraînement 15 sur le profilé.

On commence alors l'opération d'usinage, au cours de laquelle on assure le déplacement longitudinal relatif de l'élément profilé 10 par rapport à l'outil 9 en commandant son déplacement par celui de la poupée 17 dont il est solidaire et qui forme alors une poupée dite « menante ». On remarquera que si le sens de déplacement de l'élément profilé en cours d'usinage est le sens D, cela n'exclut pas que, pour certaines parties de cette phase d'usinage, les poupées d'entraînement assurent un déplacement momentané de l'élément profilé 10 en sens inverse. Lorsque, comme représenté sur la figure 3, la poupée menante 17 arrive à proximité de la poupée de maintien 13, on commande, via les moyens de commande numériques 16, d'une part la désolidarisation de la poupée 17 d'avec l'élément profilé 10, si bien que cette poupée cesse alors d'être menante, et d'autre part on solidarise la poupée d'entraînement 15 avec l'élément profilé 10, si bien que c'est elle qui devient alors la poupée menante et assure le déplacement longitudinal relatif D de l'élément profilé 10 par rapport à la tête d'usinage 9. Pendant le cycle où la poupée d'entraînement 15 est menante on ramène la poupée d'entraînement 17 vers la droite du banc (déplacement de sens E sur la figure 4) où elle est alors prête à redevenir menante dès que la poupée d'entraînement 15 sera en bout de sa course, c'est-à-dire par exemple lorsqu'elle sera à l'extrémité gauche du banc 1.

On peut, suivant l'invention, améliorer le caractère continu du déplacement de l'élément profilé 10, lorsque la poupée d'entraînement 17 arrive en bout de course, notamment lorsqu'elle arrive au voisinage de la poupée de maintien 13. Dans un tel mode de mise en oeuvre, on entraîne alors l'élément profilé 10 avec les deux poupées d'entraînement 15 et 17. Puis, quand ce mouvement est parfaitement amorcé, on commande la désolidarisation de la poupée 17, qui cesse alors d'être menante, et on la ramène en position vers la droite, ainsi que mentionné précédemment.

A l'aide des moyens de commande numérique 16 et par la synchronisation des instructions données aux moyens d'actionnement des poupées on peut ainsi les utiliser de façon que le défilement de l'élément profilé 10 dans le sens longitudinal se fasse de façon parfaitement continue. Lors d'une phase particulière d'usinage il est possible, comme mentionné précédemment, que les deux poupées d'entraînement se comportent simultanément comme des poupées menantes. Tel pourra par exemple être le cas lorsqu'il sera nécessaire de réaliser une passe d'usinage nécessitant un effort important.

La présente invention est particulièrement intéressante en ce qu'elle permet d'assurer non seulement un déplacement totalement continu de l'élément profilé, ce qui évite les problèmes de reprise d'usinage, mais également en raison du fait que ce déplacement en continu peut être réalisé sur des éléments profilés de longueur quelconque.

## Revendications

1. Machine destinée à l'usinage d'éléments profilés (10) longitudinaux, du type comportant un bâti longitudinal (1) pourvu de poupées de maintien (11, 13) de l'élément profilé à usiner (10), et d'au moins une tête d'usinage (9) mobile par rapport à l'élément profilé (10) suivant des composantes de déplacement préférentiellement perpendiculaires entre elles et perpendiculaires à l'axe longitudinal (yy') de celui-ci, laquelle machine comporte :
- au moins deux poupées de maintien (11, 13) disposées à proximité et de part et d'autre de la tête d'usinage (9), qui sont aptes, lors de l'usinage, à assurer le maintien à coulissement de l'élément profilé (10),
- au moins deux poupées d'entraînement (15, 17) aptes à se déplacer longitudinalement par rapport au bâti, disposées de part et d'autre des poupées de maintien (11, 13) et aptes à se déplacer longitudinalement par rapport au bâti (1), chaque poupée d'entraînement (15, 17) étant pourvue d'un mandrin de serrage permettant d'assurer, à la demande, un serrage glissant de l'élément profilé (10) ou un blocage de cet élément profilé de façon que le déplacement relatif de ce dernier par rapport à la tête d'usinage (9), dans la direction longitudinale (yy') soit assuré au moins en partie par le déplacement d'une poupée d'entraînement (15, 17),
- des moyens de commande (16) des déplacements des poupées d'entraînement (15, 17), et des mandrins de serrage, ces moyens de commande (16) étant aptes, en fonction des diverses phases d'usinage à réaliser, à assurer l'entraînement de l'élément profilé (10) à l'aide d'une ou de plusieurs poupées d'entraînement (15, 17), et à synchroniser les mouvements des poupées d'entraînement,
**caractérisée en ce que** les moyens de commande (16) sont prévus pour commander, lors d'une opération d'usinage, une fixation à solidarisation sur l'élément profilé (10) d'une poupée (17) en position extrême et une fixation à glissement de l'autre poupée d'entraînement (15), et pour assurer le déplacement longitudinal relatif de l'élément profilé (10) en commandant son déplacement par celui de la poupée (17) dont il est solidaire et qui forme alors une poupée « menante »,
et lorsque la poupée « menante » (17) arrive à proximité de la poupée de maintien (13), les moyens de commande (16), d'une part commandent la désolidarisation de la poupée (17) d'avec l'élément profilé (10) et d'autre part la solidarisation de l'autre poupée d'entraînement (15), qui devient alors la poupée « menante », avec l'élément profilé (10) et qui assure le déplacement longitudinal relatif de l'élément profilé (10) alors que la première poupée d'entraînement (17) est ramenée en position prête à redevenir « menante ».

2. Machine suivant la revendication 1, **caractérisée en ce que**, pour améliorer le caractère continu du déplacement de l'élément profilé (10), les moyens de commande sont prévus de telle sorte que l'on entraîne l'élément profilé (10) avec les deux poupées d'entraînement (15, 17), puis quand ce mouvement est amorcé, on commande la désolidarisation de la poupée (17) qui arrive à proximité de la poupée de maintien (13) et on la ramène en position prête à redevenir « menante ».

3. Machine suivant l'une des revendications précédentes, **caractérisée en ce qu'**au moins les poupées de maintien (11, 13) sont pourvues d'un mandrin rotatif comportant un dispositif de serrage de l'élément profilé (10) apte à assurer son positionnement autour de son axe longitudinal (yy').

4. Machine suivant l'une des revendications précédentes, **caractérisée en ce que** la tête d'usinage (9) comporte des moyens de déplacement dans le sens longitudinal (yy') de l'élément profilé (10).

## Patentansprüche

1. Maschine zur Bearbeitung langgestreckter Profilelemente (10), des Typs mit einem langgestreckten Gestell (1), das mit Spindelstöcken (11, 13) zum Halten des zu bearbeitenden Profilelements (10) und mit mindestens einem Bearbeitungskopf (9) versehen ist, der in bezug auf das Profilelement (10) entlang Verschiebungskomponenten bewegbar ist, die vorzugsweise zueinander und zur Längsachse (yy') des Profilelements senkrecht verlaufen, wobei die Maschine aufweist:
- mindestens zwei in der Nähe und zu beiden Seiten des Bearbeitungskopfs (9) angeordnete Haltespindelstöcke (11, 13), die in der Lage sind, während der Bearbeitung, das Profilelement (10) gleitend bewegbar zu halten,
- mindestens zwei in bezug auf das Gestell längsverschiebbare Antriebspindelstöcke (15, 17), die zu beiden Seiten der Haltespindelstöcke (11, 13) angeordnet sind und in bezug auf das Gestell (1) längsverschiebbar sind, wobei jeder Antriebsspindelstock (15, 17) mit einem Spanndorn versehen ist, der bei Bedarf ein gleitendes Einspannen des Profilelements (10) oder ein Blockieren des Profilelements ermöglicht, derart daß die relative Verschiebung desselben in bezug auf den Bearbeitungskopf (9) in Längsrichtung (yy') zumindest teilweise durch die Verschiebung eines Antriebsspindelstocks (15, 17) gewährleistet ist,
- eine Einrichtung (16) zum Steuern der Verschiebungen der Antriebsspindelstöcke (15, 17) und der Spanndorne, wobei die Steuereinrichtung (16) in der Lage ist, in Abhängigkeit von verschiedenen auszuführenden Bearbeitungsphasen den Antrieb des Profilelements (10) mittels eines oder mehreren Antriebsspindelstöcken (15, 17) zu gewährleisten und die Bewegungen der Antriebsspindelstöcke zu synchronisieren,
**dadurch gekennzeichnet, daß** die Steuereinrichtung (16) vorgesehen ist, um bei einem Bearbeitungsvorgang eine feste Verbindung eines Spindelstocks (17) mit dem Profilelement (10) in der Endposition und eine gleitfähige Verbindung mit dem anderen Spindelkopf (15) zu steuern, und um die relative Längsverschiebung des Profilelements (10) zu gewährleisten, indem dessen Verschiebung durch die Verschiebung des damit fest verbundenen Spindelkopfs (17) gesteuert wird, welcher somit einen "Führungs-"Spindelkopf bildet,
und wenn der "Führungs"-Spindelkopf (17) in der Nähe des Haltespindelkopfs (13) ankommt, steuert die Steuereinrichtung (16) einerseits das Lösen des Spindelstocks (17) von dem Profilelement (10) und andererseits das feste Verbinden des anderen Antriebsspindelstocks (15), der somit zum "Führungs"-Spindelstock wird, mit dem Profilelement (10), während der erste Antriebsspindelstock (17) in eine Position zurückgeführt wird, in der er bereit ist, wieder der "Führungs"-Spindelstock zu werden.

2. Maschine nach Anspruch 1, **dadurch gekennzeichnet, daß** die Steuereinrichtung zur Verbesserung des kontinuierlichen Charakters der Verschiebung des Profilelements (10) derart vorgesehen ist, daß das Profilelement (10) mit den beiden Antriebsspindelstöcken (15, 17) angetrieben wird und, nachdem die Bewegung in Gang gesetzt wurde, das Lösen des Spindelstocks (17), der in die Nähe des Haltespindelstocks (13) gelangt, gesteuert und dieser in eine Position zurückgeführt wird, in der er bereit ist, wieder der "Führungs"-Spindelstock zu werden.

3. Maschine nach einem der vorhergehenden Ansprüche, **dadurch gekennzeichnet, daß** mindestens die Haltespindelstöcke (11, 13) mit einem Drehdorn versehen sind, der ein Element zum Spannen des Profilelements (10) aufweist, welches dessen Positionierung um seine Längsachse (yy') gewährleistet.

4. Maschine nach einem der vorhergehenden Ansprüche, **dadurch gekennzeichnet, daß** der Bearbeitungskopf (9) Einrichtungen zum Verschieben in Längsrichtung (yy') des Profilelements (10) aufweist.

## Claims

1. Machine intended for the machining of longitudinal profiled elements (10), of the type comprising a longitudinal frame (1) provided with holding dollies (11, 13) for holding the profiled element to be machined (10) and provided with at least one machining head (9) which can be moved relative to the profiled element (10) according to displacement components which are preferably perpendicular to each other and perpendicular to the longitudinal axis (yy') of said profiled element, which machine comprises:
- at least two holding dollies (11, 13) disposed close to and on either side of the machining head (9), which are capable, in the machining, of securing the slide-holding of the profiled element (10),
- at least two drive dollies (15, 17) capable of moving longitudinally relative to the frame, disposed on either side of the holding dollies (11, 13) and capable of moving longitudinally relative to the frame (1), each drive dolly (15, 17) being provided with a chuck by which, according to requirement, a sliding clamping of the profiled element (10) or a locking of this profiled element can be secured such that the relative displacement of the latter relative to the machining head (9) in the longitudinal direction (yy') is secured, at least in part, by the displacement of a drive dolly (15, 17),
- control means (16) for operating the displacements of the drive dollies (15, 17) and of the chucks, these control means (16) being capable, as a function of the various machining phases to be realized, of securing the driving of the profiled element (10) with the aid of one or more drive dollies (15, 17) and of synchronizing the movements of the drive dollies,
**characterized in that** the control means (16) are designed to operate, in a machining operation, a fixed-connection fastening onto the profiled element (10) of a dolly (17) in the end position and a slide-fastening of the other drive dolly (15), and to secure the relative longitudinal displacement of the profiled element (10) by operating its displacement through that of the dolly (17) to which it is fixedly connected and which then forms a "dominant" dolly, and when the "dominant" dolly (17) arrives close to the holding dolly (13), the control means (16), on the one hand, operate the separation of the dolly (17) from the profiled element (10) and, on the other hand, the fixed connection of the other drive dolly (15), which then becomes the "dominant" dolly, to the profiled element (10) and which secures the relative longitudinal displacement of the profiled element (10), whilst the first drive dolly (17) is returned to position ready to become "dominant" again.

2. Machine according to Claim 1, **characterized in that**, in order to improve the continuous character of the displacement of the profiled element (10), control means are provided such that the profiled element (10) is driven with the two drive dollies (15, 17), then, once this movement is underway, the separation of the dolly (17) arriving close to the holding dolly (13) is operated, which dolly is returned to position ready to become "dominant" again.

3. Machine according to one of the preceding claims,
**characterized in that** at least the holding dollies (11, 13) are provided with a rotary chuck comprising a clamping device for the profiled element (10) capable of securing its positioning about its longitudinal axis (yy').

4. Machine according to one of the preceding claims,
**characterized in that** the machining head (9) comprises displacement means acting in the longitudinal direction (yy') of the profiled element (10).
